# EUROPEAN PATENT APPLICATION

(11) **EP 4 206 920 A1**
(43) Date of publication of application: **05.07.2023**
(21) Application number: 21866073.6
(22) Date of filing: 10.09.2021
(51) Int. Cl.: G06F 9/50

(54) **INSTANCE CREATION METHOD, DEVICE AND SYSTEM**

(30) Priority: 10.09.2020 CN 202010945862
(71) Applicant: Huawei Cloud Computing Technologies Co., Ltd., Guizhou 550025 (CN)
(72) Inventor: JING, Shuming, Shenzhen, Guangdong 518129 (CN); ZHU, Xuqi, Shenzhen, Guangdong 518129 (CN)
(74) Representative: Gill Jennings & Every LLP
(86) International application number: PCT/CN2021/117725
(87) International publication number: WO 2022/053021

(57) **Abstract**

An instance creation method is provided, and includes: A cloud platform receives a first resource allocation request from a first user, where the first resource allocation request includes a quantity of resources that need to be allocated to the first user. The cloud platform allocates a first resource to the first user according to the quantity of resources that need to be allocated to the first user. The cloud platform receives a first instance creation request from the first user, where the first instance creation request includes a quantity of instances that need to be created for the first user. The cloud platform creates an instance based on the first resource according to the quantity of instances that need to be created for the first user. The foregoing solution can improve resource utilization.

## Description

### TECHNICAL FIELD

This application relates to cloud computing, and in particular, to an instance creation method, a device, and a system.

### BACKGROUND

Cloud computing is a service related to information technologies, software, and the Internet. Based on cloud computing, a plurality of computing resources, storage resources, and network resources are integrated, and automated management is implemented by using software. Resources can be quickly provided with less investment by manpower. In other words, a computing capability, as a commodity, can be circulated on the Internet. The computing capability can be easily accessed at a low price just like water, electricity and gas.

However, how to improve utilization of a cloud platform is an extremely important technical problem.

### SUMMARY

To resolve the foregoing problem, this application provides an instance creation method, a device, and a system, to improve resource utilization.

According to a first aspect, an instance creation method is provided, and includes the following steps:
A cloud platform receives a first resource allocation request from a first user, where the first resource allocation request includes a quantity of resources that need to be allocated to the first user.

The cloud platform allocates a first resource to the first user according to the quantity of resources that need to be allocated to the first user.

The cloud platform receives a first instance creation request from the first user, where the first instance creation request includes a quantity of instances that need to be created for the first user.

The cloud platform creates an instance based on the first resource according to the quantity of instances that need to be created for the first user.

In this embodiment, the cloud platform allocates a user-required resource to a user. The user may create an instance based on the first resource and a requirement of the user. Because the first resource belongs to the user, the user may monitor a usage status of the first resource, and schedule and manage the first resource according to the usage status of the first resource, thereby improving utilization of the first resource.

In some possible designs, the cloud platform receives a first instance adding request from the first user. The first instance adding request includes a quantity of instances that need to be added for the first user.

The cloud platform adds an instance based on the first resource according to the quantity of instances that need to be added for the first user.

In some possible designs, the cloud platform receives a first instance deletion request from the first user. The first instance deletion request includes a quantity of instances that need to be deleted for the first user.

The cloud platform deletes an instance based on the first resource and the quantity of instances that need to be deleted for the first user.

In some possible designs, the quantity of instances that need to be created for the first user is greater than or equal to 2.

In some possible designs, the cloud platform receives a first query instruction from the first user, queries a usage status of the first resource according to the first query instruction, and sends the usage status of the first resource to the first user.

According to a second aspect, an instance creation method is provided, and includes the following steps:
A cloud platform receives a second resource allocation request from a third party, where the second resource allocation request includes a quantity of resources that need to be allocated to the third party.

The cloud platform allocates a second resource to the third party according to the quantity of resources that need to be allocated to the third party.

The cloud platform receives a second instance creation request from a second user, where the second instance creation request includes a quantity of instances that need to be created for the second user.

The cloud platform creates an instance based on the second resource according to the quantity of instances that need to be created for the second user.

In the foregoing embodiment, the third party may purchase the second resource from a provider of the cloud platform, and create an instance based on the second resource according to a requirement of the user. The third party, as an intermediary, manages and charges the user and promotes the third party to create more services that improve utilization of the cloud platform, thereby booming a market of the cloud platform.

In some possible designs, the cloud platform receives a second instance adding request from the second user. The second instance adding request includes a quantity of instances that need to be added for the second user. The cloud platform adds an instance based on the second resource according to the quantity of instances that need to be added for the second user.

In some possible designs, the cloud platform receives a second instance deletion request from the second user. The second instance deletion request includes a quantity of instances that need to be deleted for the second user. The cloud platform deletes an instance based on the second resource according to the quantity of instances that need to be deleted for the second user.

In some possible designs, the quantity of instances that need to be created for the second user is greater than or equal to 2.

In some possible designs, the cloud platform receives a second query instruction from the third party, queries a usage status of the second resource according to the second query instruction, and sends the usage status of the second resource to the third party.

According to a third aspect, a cloud platform is provided, including: a receiving module, an allocation module, and a creation module.

The receiving module is configured to receive a first resource allocation request from a first user, where the first resource allocation request includes a quantity of resources that need to be allocated to the first user.

The allocation module is configured to allocate a first resource to the first user according to the quantity of resources that need to be allocated to the first user.

The receiving module is configured to receive a first instance creation request from the first user. The first instance creation request includes a quantity of instances that need to be created for the first user.

The creation module is configured to create an instance based on the first resource according to the quantity of instances that need to be created for the first user.

In some possible designs, the cloud platform further includes an adding module. The receiving module is configured to receive a first instance adding request from the first user. The first instance adding request includes a quantity of instances that need to be added for the first user. The adding module is configured to add an instance based on the first resource according to the quantity of instances that need to be added for the first user.

In some possible designs, the cloud platform further includes a deletion module. The receiving module is configured to receive a first instance deletion request from the first user. The first instance deletion request includes a quantity of instances that need to be deleted for the first user. The deletion module is configured to delete an instance based on the first resource according to the quantity of instances that need to be deleted for the first user.

In some possible designs, the quantity of instances that need to be created for the first user is greater than or equal to 2.

In some possible designs, the cloud platform further includes a query module. The receiving module is configured to receive a first query instruction from the first user. The query module is configured to query a usage status of the first resource according to the first query instruction, and send the usage status of the first resource to the first user.

According to a fourth aspect, a cloud platform is provided, including: a receiving module, an allocation module, and a creation module.

The receiving module is configured to receive, by the cloud platform, a second resource allocation request from a third party. The second resource allocation request includes a quantity of resources that need to be allocated to the third party.

The allocation module is configured to allocate a second resource to the third party according to the quantity of resources that need to be allocated to the third party.

The receiving module is configured to receive a second instance creation request from a second user. The second instance creation request includes a quantity of instances that need to be created for the second user.

The creation module is configured to create an instance based on the second resourceand the quantity of instances that need to be created for the second user.

In some possible designs, the cloud platform further includes an adding module.

The receiving module is configured to receive a second instance adding request from the second user. The second instance adding request includes a quantity of instances that need to be added for the second user.

The adding module is configured to add an instance based on the second resource according to the quantity of instances that need to be added for the second user.

In some possible designs, the cloud platform further includes a deletion module.

The receiving module is configured to receive a second instance deletion request from the second user. The second instance deletion request includes a quantity of instances that need to be deleted for the second user.

The deletion module is configured to delete an instance based on the second resource according to the quantity of instances that need to be deleted for the second user.

In some possible designs, the quantity of instances that need to be created for the second user is greater than or equal to 2.

In some possible designs, the cloud platform further includes a query module.

The receiving module is configured to receive a second query instruction from the third party.

The query module is configured to query a usage status of the second resource according to the second query instruction, and send the usage status of the second resource to the third party.

According to a fifth aspect, a management node is provided, including a processor and a memory. The processor executes code in the memory to perform the method according to any one of the possible designs of the first aspect.

According to a sixth aspect, a computer-readable storage medium is provided, including instructions. When the instructions are run on a computer, the computer is enabled to perform the method according to any one of the possible designs of the first aspect.

### BRIEF DESCRIPTION OF DRAWINGS

To describe the technical solutions in embodiments of this application or in the background more clearly, the following describes the accompanying drawings for describing the embodiments of this application or the background.
FIG. 1 is a schematic diagram of a structure of a cloud system according to this application;
FIG. 2 is a schematic diagram of a structure of a cloud platform according to this application;
FIG. 3 is another schematic diagram of a structure of a cloud platform according to this application;
FIG. 4A and FIG. 4B each are a specific schematic diagram of a structure of a cloud platform according to this application;
FIG. 5 is a schematic diagram of a user desktop of a terminal device according to this application;
FIG. 6 is a schematic diagram of a resource purchase web page according to this application;
FIG. 7 is a schematic diagram of an instance creation web page according to this application;
FIG. 8A to FIG. 8D are some schematic diagrams of instance adding and instance deletion;
FIG. 9A to FIG. 9C are some schematic flowcharts of an instance creation method according to this application;
FIG. 10 is a schematic diagram in which a user creates a resource monitoring system and a second scheduler on a first resource according to this application;
FIG. 11 is another schematic flowchart of an instance creation method according to this application;
FIG. 12 is a schematic diagram of a structure of a cloud platform according to this application; and
FIG. 13 is a schematic diagram of a structure of a management node according to this application.

### DESCRIPTION OF EMBODIMENTS

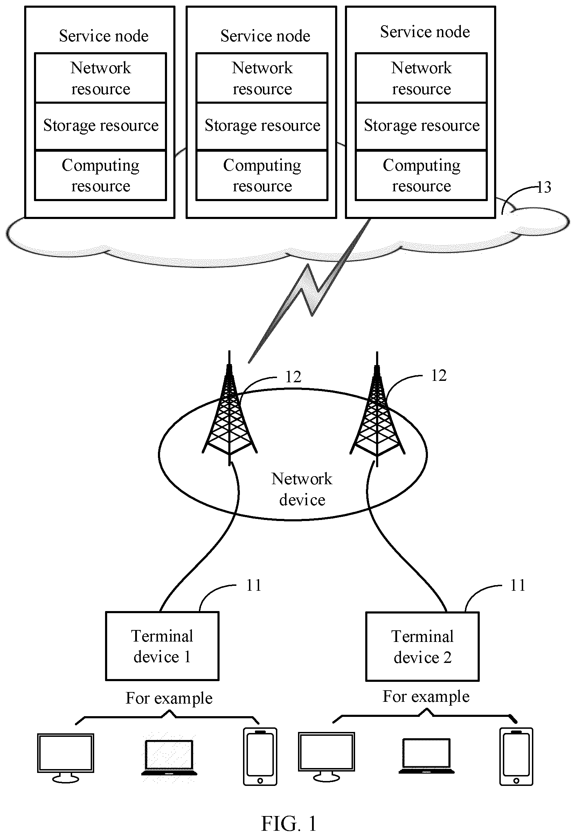

FIG. 1 is a schematic diagram of a structure of a cloud system according to this application. The cloud system in this application may include a terminal device 11, a network device 12, and a cloud platform 13.

The terminal device 11 may run a client application. The client application is an intermediary between a user and a server. The user enters instructions to the client, and the client translates the instructions into data, and sends the data to the cloud platform 13. After completing data processing, the cloud platform 13 returns a result. Then, the client graphically presents the result to the user. For example, a game client application or a VR client application. The terminal device may be a device with high configuration and high performance (for example, multi-core, a high dominant frequency, and a large internal memory), or may be a device with low configuration and low performance (for example, a single core, a low dominant frequency, and a small internal memory). In addition, after the cloud platform 13 executes a large quantity of computing and storage tasks, the terminal device may be a terminal having a high input/output capability, a high communication capability, a low computing capability, and a low storage capability. For example, a cloud terminal or a thin terminal.

The network device 12 is configured to transmit data between the terminal device 11 and the cloud platform 13 by using a communication network of any communication mechanism/communication standard. The communication network may be a wide area network, a local area network, a point-to-point connection, or the like, or any combination thereof.

An owner of the cloud platform 13 deploys a cloud computing infrastructure, that is, deploys a computing resource (for example, a server), a storage resource (for example, a memory), a network resource (for example, a network interface card), and the like. Then, an owner (for example, an operator) of a public cloud virtualizes the computing resource, the storage resource, and the network resource of the cloud computing infrastructure, and provides a corresponding service for a user (for example, a subscriber) of the cloud for use. The user may use a service provided by the cloud platform to run an application of the user, such as a deep learning application, an artificial intelligence application, and a big data application.

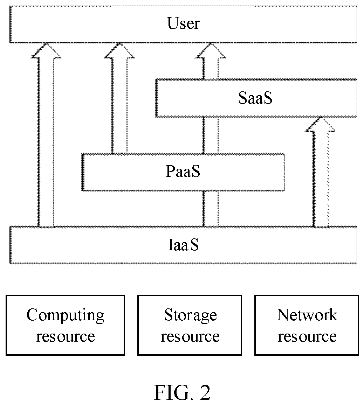

As shown in FIG. 2, a cloud platform may provide the following three services for a user of a terminal device: a cloud computing infrastructure as a service (Infrastructure as a Service, IaaS), platform as a service (Platform as a Service, PaaS), and software as a service (Software as a Service, SaaS).

A service provided by the IaaS for the user is a service that utilizes a cloud computing infrastructure, including processing, storage, network, and other basic computing resources. The user can deploy and run any software, including an operating system and an application. The user does not manage or control any cloud computing infrastructure. However, the user can control selection of the operating system, storage space, and application deployment, and may obtain control of a network component with a limitation (such as a firewall or load balancer).

A service provided by the PaaS for the user is a service that deploys, on the cloud computing infrastructure, an application developed or purchased by the user by using a development language and tool (such as Java, Python, or Net) provided by a provider. The user does not need to manage or control an underlying cloud computing infrastructure, including a network, server, the operating system, a memory, and the like. However, the user can control a deployed application and control configuration of a managed environment in which the application is running.

A service provided by the SaaS for the user is an application running on the cloud computing infrastructure by an operator. The user may access the application on the cloud computing infrastructure by using a client interface, for example, a browser, on various devices. The user does not need to manage or control any cloud computing infrastructure, including the network, the server, the operating system, the memory, and the like.

It should be understood that the foregoing three services are only used as specific examples. In actual application, the service may alternatively be another service with a higher or lower integration degree, which is not specifically limited herein.

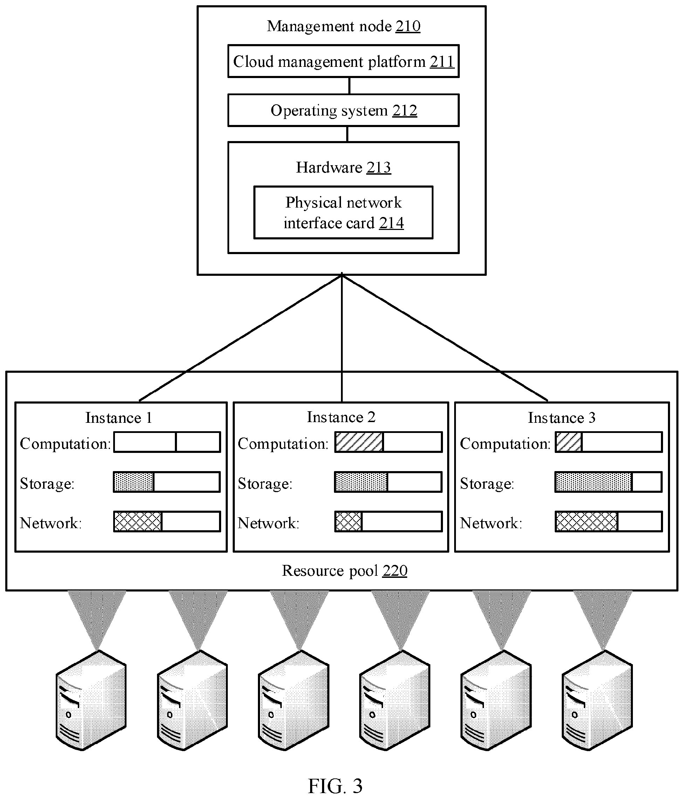

FIG. 3 is another schematic diagram of a structure of a cloud platform according to this application. The cloud platform includes a management node 210 and a resource pool 220. The management node 210 may communicate with the resource pool 220.

The management node 210 includes a cloud management platform 211, an operating system 212, and hardware 213. The cloud management platform 211 may be an AWS (Amazon Web Service), an OpenStack, or a CloudStack used to provide an IaaS service, a Hadoop or an Apache Mesos used to provide a PaaS service, a Kubernetes or swarm used to provide a SaaS service, or the like, which is not specifically limited herein. The hardware 213 may include a physical network interface card 214.

In an example shown in FIG. 3, the management node 210 is disposed in a centralized manner. In another embodiment, the management node 210 may also be disposed in a distributed manner. For example, when the management node 210 is disposed in the centralized manner, functions of the management node 210 are centralized on one super server for implementation. When the management node 210 is disposed in the distributed manner, functions of the management node 210 are distributed on a plurality of ordinary servers for implementation, which is not specifically limited herein.

The resource pool 220 may include a computing resource pool, a storage resource pool, and a network resource pool. The computing resource pool, the storage resource pool, and the network resource pool are all resource pools formed by decoupling a physical hardware resource from an upper-layer application through a virtualized management program.

The computing resource pool may include a plurality of processing units. Each processing unit may include a central processing unit (central processing unit, CPU), a cache (cache), a northbridge chip, a southbridge chip, a direct memory access (direct memory access, DMA) controller, and the like. The CPU may be a center of computing and control. The CPU may use a complex instruction set computer (complex instruction set computer, CISC) architecture (for example, an x86 architecture), a reduced instruction set computer (reduced instruction set computer, RISC) architecture (for example, an MIPS (microprocessor without interlocked piped stages) architecture), or the like. The CPU further includes a plurality of registers. The registers are high-speed storage components with a limited storage capacity, and may be configured to temporarily store instructions, data, an address, and the like. For example, an instruction register (IR), a program counter (PC), and an accumulator (ACC). The cache is configured to store instructions or data that has just been used or recycled by the CPU. If the CPU needs to use the instructions or the data again, the instructions or the data may be directly invoked from the cache, reducing a time for which the CPU waits. Therefore, system efficiency is increased. The northbridge chip is a chip closest to the CPU and is configured to be responsible for data transmission between the CPU and the cache. Because the northbridge chip processes a large amount of data and generates a large amount of heat. Therefore, the northbridge chip may be covered with a heat sink or work with a fan to enhance heat dissipation. The southbridge chip is configured to: process a low-speed signal, communicate with the CPU through the northbridge chip, and exchange data with an external device through various interfaces. The DMA controller is configured to copy data from one address space to another address space. Before data transfer, the CPU needs to hand over a bus control right to the DMA controller. After the data transfer is complete, the DMA controller should immediately hand over the bus control right to the CPU. During data transfer, the DMA controller always has the bus control right. Optionally, the processing unit further includes a digital signal processor (digital signal processor, DSP), a graphics processing unit (graphics processing unit, GPU), a neural-network processing unit (neural-network processing unit, NPU), and the like. The processing unit may be of homogeneous structure, or a heterogeneous structure. A common heterogeneous structure may be a CPU and DSP, a CPU and NPU, a CPU and GPU, a CPU, DSP, and GPU, or the like.

The storage resource pool may include a plurality of internal memories and a plurality of hard disk drives. The plurality of hard disk drives may be of a homogeneous structure, or a heterogeneous structure. The hard disk drives may include a mechanical hard disk drive (Hard Disk Drive, HDD), a solid state drive (Solid State Drive, SDD), a hybrid hard drive (hybrid hard drive, HDD), and the like.

The network resource pool may include a plurality of network interface cards, a plurality of routers, a plurality of switches, a plurality of firewalls, a plurality of load balancers, and the like. The plurality of network interface cards may be of a homogeneous structure, or a heterogeneous structure. The network interface cards may include a standard Ethernet network interface card and a PCMCIA network interface card, may include a wireless network interface card and an optical fiber network interface card, may include an Ethernet network interface card and a token ring network interface card, or may include a one-hundred-megabit network interface card, a gigabit network interface card, an intelligent network interface card, and the like. The plurality of routers may include a backbone router, an enterprise router, and an access router, or may include a border router, an intermediate node router, and the like. The switch may include a wide area network switch and a local area network switch, may include an Ethernet switch, a fast Ethernet switch, a gigabit Ethernet switch, an FDDI (fiber distributed data interface) switch, an ATM (asynchronous transfer mode) switch, and a token ring switch, or may include an enterprise switch, a department switch, a workgroup switch, and the like. The firewall may include a filtering firewall or an application proxy firewall. The load balancers may include a local load balancer and a global load balancer.

It should be understood that the cloud system is only used as a specific example, and should not constitute a specific limitation.

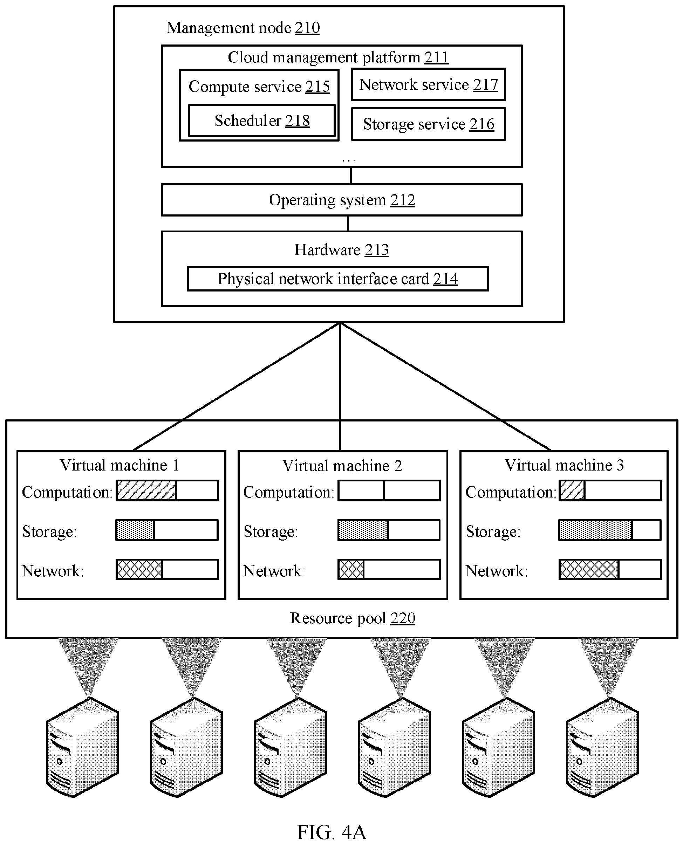

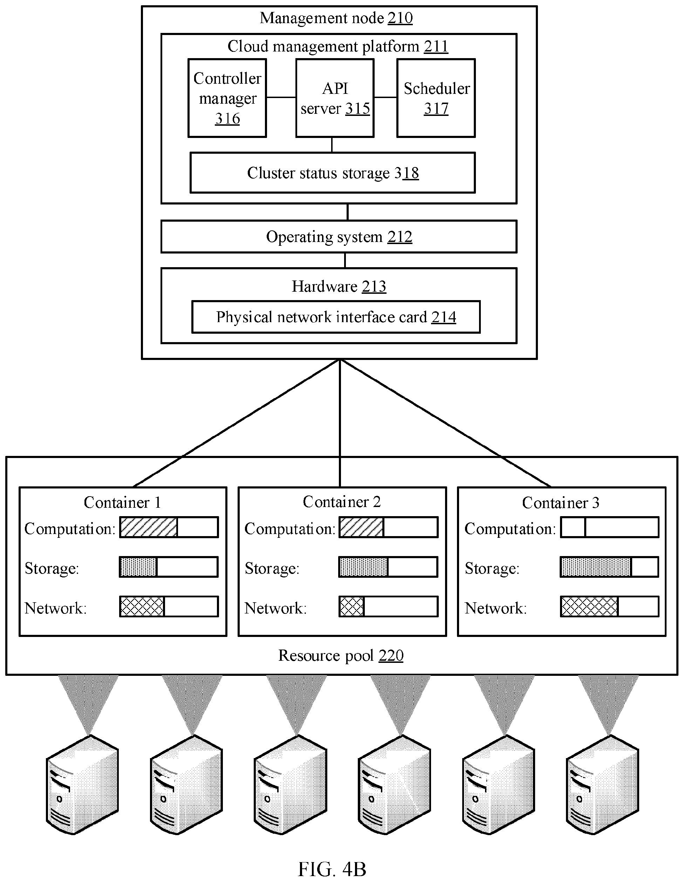

FIG. 4A and FIG. 4B show some embodiments in which more details of a management node 210 are described. A cloud management platform in the management node 210 shown in FIG. 4A is an OpenStack, and is configured to create a virtual machine instance. A cloud management platform in the management node 210 shown in FIG. 4B is a Kubernetes, and is configured to create a container instance.

FIG. 4A is a specific schematic diagram of a cloud platform according to this application. The cloud platform in FIG. 4A embodies a cloud management platform 211 in the cloud platform in FIG. 2. For example, the cloud management platform 211 is an OpenStack. The cloud management platform 211 may include a compute service 215, a storage service 216, and a network service 217. In addition, the cloud management platform 211 may further include an identity service module, a dashboard service module, and the like (not shown in the figure).

The compute service 215 may be a computing organization controller in the cloud management platform 211, and is used to manage all activities of an instance in a life cycle. For example, the compute service 215 may be a Nova component. The Nova component may include a Nova scheduler (Nova scheduler) 218 configured to allocate an instance to a specific computing node; a Nova interface (Nova API) configured to serve as an entry of the Nova component and receive a user request; a management component (Nova conductor) configured to be responsible for interacting with a Nova database, and a computing component (Nova compute) configured to create and manage an instance and provide message transfer; and a message queue (MESSAGE queue), used to transfer messages between Nova components (not shown in the figure).

The storage service 216 may be a component configured to provide storage, in the cloud management platform 211. For example, the storage service 216 may include one or more of a Cinder component, a Swift component, and a Glance component. The Cinder component is mainly configured to provide a block storage service, the Swift component is mainly configured to provide an object storage service, and the Glance component is mainly configured to provide a mirror image storage service. For example, the storage service 216 is the Cinder component. The Cinder component may include: a Cinder interface (Cinder API) configured to serve as an entry of the Cinder component and receive a user request; a Cinder scheduler configured to be responsible for collecting capacity and capability information reported by a back end, and complete scheduling of a volume to a specified capacity component (cinder-volume) according to a set algorithm; and a capacity component (cinder-volume) which uses different configuration files and accesses different back-end devices. Storage manufacturers insert drive codes to interact with devices to complete collection of device capacity and capability information and a volume operation. A backup component (Cinder backup) is configured to back up volume data to another storage medium. Currently, Swift, Ceph, or TSM provides drive.

The network service 217 may be a component that is in the cloud management platform 211 and that is configured to provide network topology management for a network node. For example, the network service 217 may be a Neutron component. The Neutron component may include network components such as a network (network), a subnet (subnet), a port (port), a switch (switch), and a router (router).

In addition, the cloud management platform 211 may further include the identity service module, the dashboard service module, and the like. As an identity authentication system, the identity service module can check which user may access which service. In addition, the identity service module provides a plurality of authentication modes, including a user account and password, a token (Token), and an AWS-like login mechanism. The dashboard service module is configured to provide a graphical interface for the user. For example, the cloud management platform 211 is the OpenStack. The identity service module may be a Keystone, and the dashboard service module may be a Horizon.

FIG. 4B is a specific schematic diagram of a cloud platform according to this application. The cloud platform in FIG. 4B embodies the cloud management platform 211 in the cloud platform in FIG. 3. For example, the cloud management platform 211 is a Kubernetes (k8s for short). The cloud management platform 211 may include an API server (API Server) 315, a controller manager (Controller Manager) 316, a scheduler (Scheduler) 317, and a cluster status storage 318.

The API server 315 is a unique entry for a resource and provides mechanisms such as authentication, authorization, access control, API registration, and discovery.

The controller manager 316 is configured to create a container, and is responsible for maintaining a status of a cluster, for example, fault detection, automatic expansion, and rolling update. The controller manager 316 may include a replication controller (Replication Controller), a node controller (Node Controller), a namespace controller (Namespace Controller), a service account controller (Service Account Controller), a token controller (Token Controller), a service controller (Service Controller), and a endpoint controller (Endpoint Controller).

The scheduler 317 is configured to schedule a container to a corresponding node according to a predetermined scheduling policy. The scheduling policy is classified into two types: predicates (Predicates) and priorities (Priorities). The predicates are mandatory rules. All nodes are traversed, and a list of conforming nodes are screened out according to the predicates. If no node that meets the predicates exists, the container is suspended until a node meets the predicates exists. Based on the nodes screened according to the predicates, a node to be selected is scored and ranked according to the priorities, to obtain an optimal node.

The cluster status storage 318 is responsible for storing configuration information of a cluster and status information of various resources. When data changes, the cluster status storage quickly notifies another related component.

It should be understood that the cloud management platforms 211 shown in FIG. 4A and FIG. 4B are only some specific embodiments. In actual application, the cloud management platform 211 may be further of another structure, which is not specifically limited herein. In some application scenarios, both the OpenStack and Kubernetes may be simultaneously installed on the management node 210, to provide a container and a virtual machine instance for the user.

An instance may be understood as a cloud server (Cloud Virtual Machine, CVM), and includes most basic resources such as a computing resource (including a processor), a storage resource (including an internal memory and a disk), and a network resource. For example, the instance may include a virtual machine or a container. The instance is created by a cloud system based on an instance specification selected by the user. The cloud system usually provides several instance specifications. At least one of the computing resource, storage resource, or network resource of an instance created according to different instance specifications is different. Table 1 is used as an example. The cloud system may provide the following several instance specifications:

**Table 1 Several instance specifications provided by the cloud system**

| Instance specification | Parameter type | Parameter | Description |
|---|---|---|---|
| Standard type | Computing resource: | Dominant frequency of a processor: 1.0 GHz | Balanced computing resource, internal memory resource, and network resource, meeting application resource requirements in most scenarios |
| | Storage resource: | Internal memory: 256M | |
| | | Disk: 60G | |
| | Network resource: | Uplink bandwidth: 5 M/mps; downlink bandwidth: 5 M/mps | |
| Internal memory type | Computing resource: | Dominant frequency of a processor: 1.0 GHz | Characterized with large internal memory and suitable for applications that need a large number of internal memory operations, search, and computing, such as a high-performance database and distributed internal memory cache |
| | Storage resource: | Internal memory: 1024M | |
| | | Disk: 60G | |
| | Network resource: | Uplink bandwidth: 5 M/mps; downlink bandwidth: 10 M/mps | |
| High input/output (I/O) type | Computing resource: | Dominant frequency of a processor: 1.0 GHz | Characterized with a high throughput, a low access latency, and the like, and suitable for I/O-intensive applications such as a high-performance database that has high requirements for disk read/write and a latency |
| | Storage resource: | Internal memory: 512M | |
| | | Disk: 60G | |
| | Network resource: | Uplink bandwidth: 15 M/mps; downlink bandwidth: 15 M/mps | |
| Big data type | Computing resource: | Dominant frequency of a processor: 1.0 GHz | Carry massive storage resources, characterized with a high throughput, and suitable for throughput-intensive applications such as distributed computing, massive log processing, a distributed file system, a large data warehouse, and the like |
| | Storage resource: | Internal memory: 256M | |
| | | Disk: 20T | |
| | Network resource: | Uplink bandwidth: 5 M/mps; downlink bandwidth: 5 M/mps | |
| Computing type | Computing resource: | Dominant frequency of a processor: 3.2 GHz | Characterized with highest single-core computing performance, and suitable for computing-intensive applications such as batch processing, high-performance computing, and a large-scale game server |
| | Storage resource: | Internal memory: 512M | |
| | | Disk: 50G | |
| | Network resource: | Uplink bandwidth: 5 M/mps; downlink bandwidth: 5 M/mps | |

The user may select one of a plurality of instance specifications to create an instance. For example, when the user needs to create an instance that meets requirements of massive storage resources, the user may select an instance specification of big data. If the user needs to create an instance that has a high throughput and a low access latency, the user may select an instance specification of high input/output. However, for ease of management, due to limited resources, and the like, the cloud platform usually provides only a limited quantity of instance specifications, and cannot provide an unlimited quantity of instance specifications.

When the user selects a specific instance specification to create an instance, the scheduler in the cloud platform corresponds, according to a parameter of the specific instance specification, a resource required by the instance to the computing resource, storage resource, and network resource in a resource pool, that is, allocates the computing resource, storage resource, and network resource in the resource pool to the instance according to the resource required for the instance. After the instance is created successfully, the instance exclusively uses the computing resource, storage resource, and network resource that are allocated to the instance. The user may install an application of the user on an instance. However, if utilization of the application that is running is low, utilization of a resource allocated to the instance is low accordingly.

To resolve the foregoing problem, this application provides an instance creation method, a device, and a system, to effectively improve resource utilization.

The following describes a user desktop on a terminal device in detail. The user desktop is displayed after the terminal device is started.

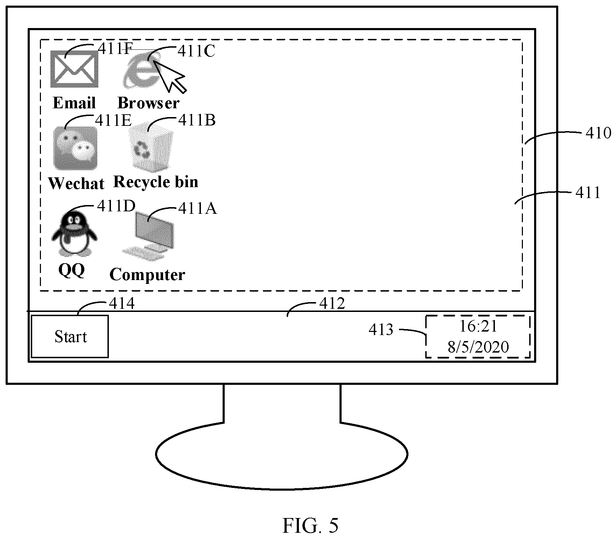

As shown in FIG. 5, a user desktop 410 may include: an icon display area 411, a task bar 412, a calendar indicator 413, and a start menu 414.

The icon display area 411 may be used to display an icon or a shortcut of a commonly used application, for example, may display a computer icon 411A, a recycle bin icon 411B, a browser icon 411C, an email icon 411F, a WeChat icon 411E, and a QQ icon 411D. The browser icon 411C may be configured to start a browser application. For example, in response to a user operation acting on the browser icon 411C, for example, a double-clicking left button operation, the terminal device may start the browser application, and enter, in an address bar of a browser, an address of a user web page provided by a cloud platform, thereby performing a function such as logging in to the user web page provided by the cloud platform.

The task bar 412 may be configured to display an icon of a currently used application. For example, if a user has opened a WeChat application, a QQ application, and a browser application, the task bar 412 displays a WeChat icon, a QQ icon, and a browser icon. When the user clicks an icon in the task bar 412, the terminal device determines whether an application corresponding to the icon is in an open status or a hidden status. If the application is in the open status, the terminal device changes a status of a corresponding application to the hidden status. On the contrary, if the application is in the hidden status, the terminal device changes the status of the corresponding application to the open status.

The calendar indicator 413 may be configured to indicate current time, for example, a date, a day of a week, and hour and minute information.

The start menu 414 is a basic part of a graphical user interface (GUI) of a Windows operating system (Windows), and may be referred to as central control area of the operating system. The start menu 414 generally includes turning off a computer, running, help, search, setting, a file, an application list, and the like. The user may find the application list by clicking the start menu 414. The application list may include shortcuts of a plurality of applications, for example, a computer shortcut, a recycle bin shortcut, a browser shortcut, an email shortcut, a WeChat shortcut, and a QQ shortcut. The browser shortcut may be used to start the browser application. For example, in response to a user operation acting on a browser shortcut, for example, double-clicking a left button, the terminal device may start a browser application, and enter, in an address bar of the browser, an address of a user web page provided by the cloud platform, thereby performing a function such as logging in to the user web page provided by the cloud platform. In a default status, the start menu 414 is located in a lower left corner of a screen. Definitely, the user may also set the start menu 414 in another position of the screen as required.

It may be understood that FIG. 5 shows only the user desktop on the terminal device, and should not constitute a limitation on this embodiment of this application.

The following describes in detail a resource purchase web page and an instance creation web page on the terminal device. The resource purchase web page is triggered after the user triggers the browser icon on the user desktop and enters an address of the resource purchase web page in the address bar of the browser. The instance creation web page is triggered after a user triggers the browser icon on the user desktop and enters an address of the instance creation web page in the address bar of the browser. Herein, the user may purchase, through the resource purchase web page, the computing resource, storage resource, and network resource that are required by the user, and then create, through the instance creation web page, one or more instances based on the computing resource, storage resource, and network resource that are purchased by the user.

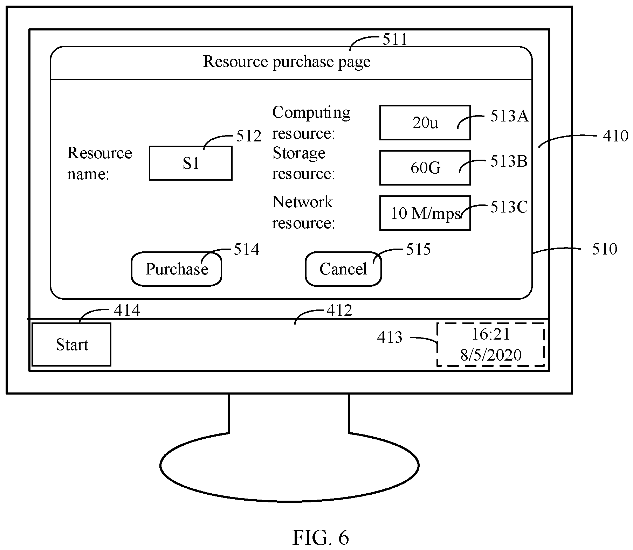

As shown in FIG. 6, a resource purchase web page 510 may include: a title bar 511, a resource name prompt box 512, a computing resource input box 513A, a storage resource input box 513B, a network resource input box 513C, a purchase button 514, and a cancellation button 515.

The title bar 511 is configured to display a theme of a web page, for example, a resource purchase page. The theme of the web page may be displayed in the center, displayed on the left, or the like, which is not specifically limited herein.

The resource name prompt box 512 may be a display text box or an input text box. When a resource name is automatically generated by a cloud platform, the resource name prompt box 512 may be represented by the display text box, and the resource name automatically generated by the cloud platform is displayed in the display text box. When the resource name is entered by a user, the resource name prompt box 512 may be represented by the input text box, and the resource name entered by the user is displayed in the input text box. For example, the user may enter a resource name "S1" in the input text box.

The computing resource input box 513A, the storage resource input box 513B, and the network resource input box 513C may be respectively configured to enter a quantity of computing resources, a quantity of storage resources, and a quantity of network resources that the user expects to purchase. For example, if the user expects to purchase 20u of the computing resources, 60G of the storage resources, and 10 M/mps of the network resources, the user may enter 20u in the computing resource input box 513A, 60G in the storage resource input box 513B, and 10 M/mps in the network resource input box 513C. It may be understood that the computing resource may be divided into a plurality of basic computational units, the storage resource may be divided into a plurality of basic storage units, and the network resource may be divided into a plurality of basic network units. Therefore, when purchasing a resource, the user needs to enter an integer multiple of a basic unit. In addition, although not shown in the figure, the user may further specify a type of the computing resource, a type of the storage resource, and a type of the network resource. For example, the user may specify that a CPU chip and a GPU chip are used for the computing resource, an SDD is used for the storage resource, and an SDN is used for the network resource.

The purchase button 514 is configured for the user to confirm a resource to be purchased. On the contrary, the cancellation button 515 is configured for the user to cancel the resource to be purchased. When the user clicks the purchase button 514, the terminal device sends an allocation request to the cloud platform, to allocate a user-purchased resource to the user.

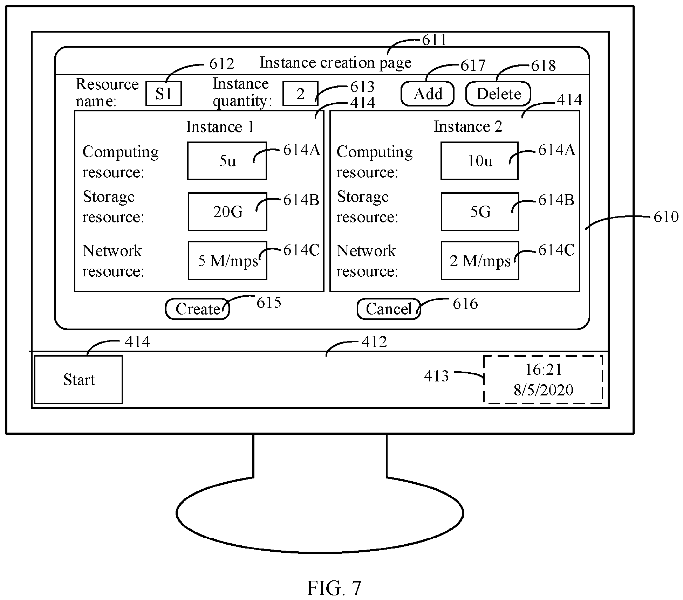

As shown in FIG. 7, an instance creation web page 610 may include a title bar 611, a resource name input box 612, an instance quantity input box 613, an instance unit 614, a creation button 615, a cancellation button 616, an adding button 617, and a deletion button 618.

The title bar 611 is configured to display a theme of a web page, for example, an instance creation page. The theme of the web page may be displayed in the center, displayed on the left, or the like, which is not specifically limited herein.

The resource name input box 612 may be an input text box, and a user may enter a name of a resource of an instance to be created into the resource name input box 612.

The instance quantity input box 613 may be an input text box. The user creates a corresponding quantity of instances based on a resource according to a value entered in the instance quantity input box 613.

A quantity of the instance units 614 is equal to a value entered in the instance quantity input box 613. Each instance unit 614 includes a computing resource input box 614A, storage resource input box 614B, and network resource input box 614C. The computing resource input box 614A, storage resource input box 614B, and network resource input box 614C may be respectively configured to enter a quantity of computing resources, a quantity of storage resources, and a quantity of network resources that are of a corresponding instance.

For example, it is assumed that the user expects to create two instances based on a resource whose resource name is "S1". An instance 1 needs 5u of computing resources, 20G of storage resources, and 5 M/mps of network resources. An instance 2 needs 10u of computing resources, 5G of storage resources, and 2 M/mps of network resources. The user may enter: a resource name "S1" in the resource name input box 612, "2" in the instance quantity input box 613, 5u in a computing resource input box 614A, 20G in a storage resource input box 614B, and 5 M/mps in a network resource input box 614C that are of an instance unit 614 corresponding to the instance 1, and 10u in a computing resource input box 614A, 5G in a storage resource input box 614B, and 2 M/mps in a network resource input box 614C that are of an instance unit 614 corresponding to the instance 2.

It may be understood that, although not shown in the figure, the user may further specify a type of a computing resource, a type of a storage resource, and a type of a network resource that are used for each instance. For example, the user may specify, for the instance 1, that a CPU chip and a GPU chip are used for a computing resource, an SDD is used for a storage resource, and an SDN is used for a network resource, and specify, for the instance 2, that a CPU chip is used for a computing resource, an SDD is used for a storage resource, and an SDN is used for a network resource.

The creation button 615 is configured for the user to confirm creation of an instance. On the contrary, the cancellation button 616 is configured for the user to cancel the creation of an instance. When the user clicks the creation button 615, a terminal device sends an instance creation request to a cloud platform to create an instance based on a resource purchased by the user. On the contrary, when the user clicks the cancellation button 616, the terminal device does not send the instance creation request to the cloud platform to create an instance based on a resource purchased by the user. The adding button 617 is configured to add an instance based on a resource purchased by the user. The deletion button 618 is configured to delete an instance based on the resource purchased by the user.

It may be understood that FIG. 6 and FIG. 7 show only examples of the resource purchase web page 510 and the instance creation web page 610 on the terminal device, and should not constitute a limitation on the embodiments of this application.

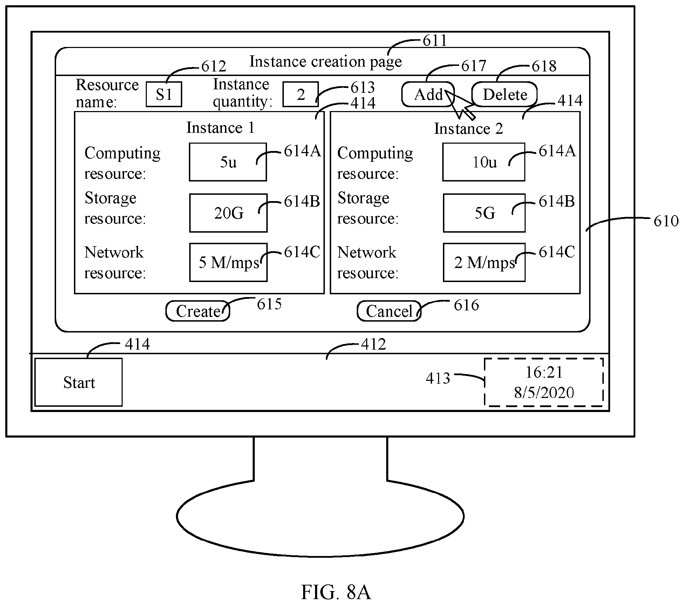

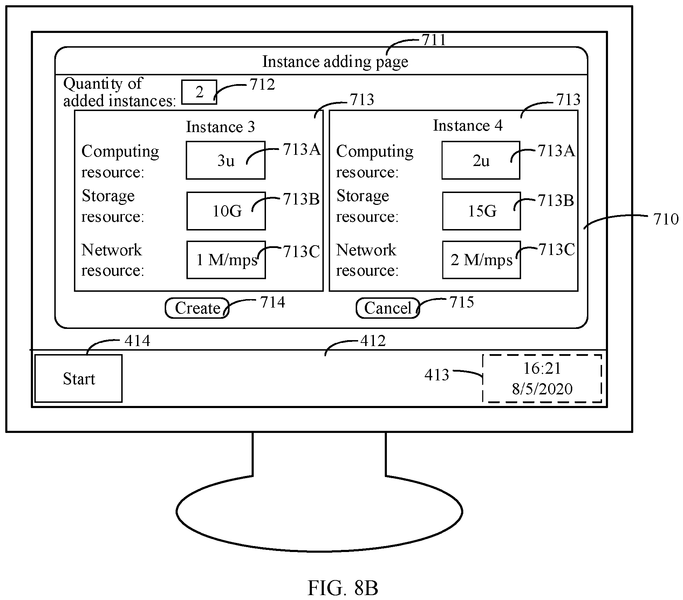

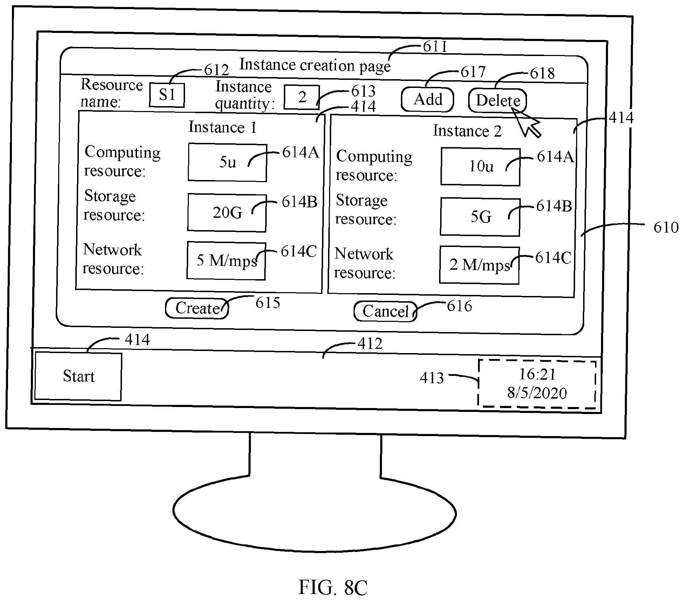

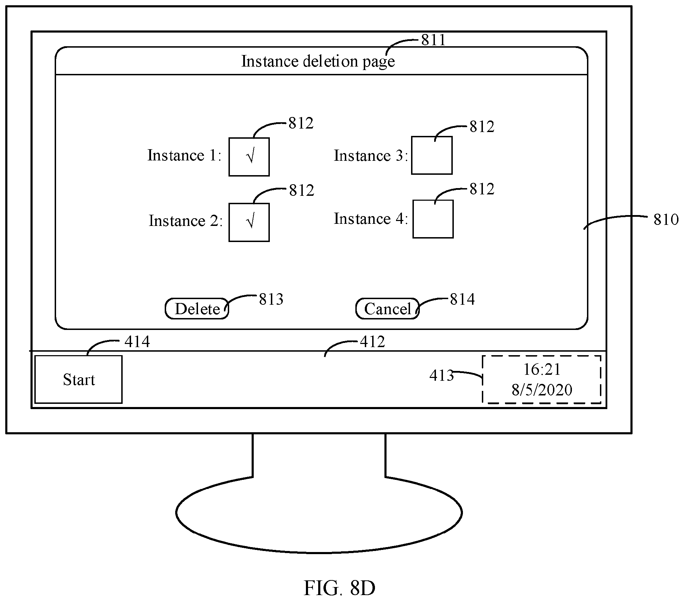

The following describes in detail an instance adding web page and an instance deletion web page on the terminal device. After an instance is created on a resource purchased by a user, as shown in FIG. 8A, the user may click an adding button 617 on an instance creation page to start an instance adding web page 710 shown in FIG. 8B, thereby adding an instance based on the resource purchased by the user. Alternatively, as shown in FIG. 8C, the user may click a deletion button 618 on an instance creation page to start an instance deletion web page 810 shown in FIG. 8D, thereby reducing an instance based on the resource purchased by the user.

As shown in FIG. 8B, the instance adding web page 710 includes a title bar 711, an added instance quantity input box 712, an added instance unit 713, a creation button 714, and a cancellation button 715.

The title bar 711 is configured to display a theme of a web page, for example, an instance adding page. The theme of the web page may be displayed in the center, displayed on the left, or the like, which is not specifically limited herein.

The added instance quantity input box 712 may be an input text box. The user adds an instance of a corresponding quantity based on a resource according to a value entered in the added instance quantity input box 712.

A quantity of the added instance units 713 is equal to a value entered in the added instance quantity input box 712. Each added instance unit 713 includes a computing resource input box 713A, storage resource input box 713B, and network resource input box 713C. The computing resource input box 713A, storage resource input box 713B, and network resource input box 713C may be respectively configured to enter a quantity of computing resources, a quantity of storage resources, and a quantity of network resources that are of a corresponding instance.

For example, it is assumed that the user expects to add two instances based on a purchased resource "S1". An instance 3 needs 3u of computing resources, 10G of storage resources, and 1 M/mps of network resources. An instance 4 needs 2u of computing resources, 15G of storage resources, and 2 M/mps of network resources. The user may enter a value 2 in the added instance quantity input box 712, 3u in a computing resource input box 713A, 10G in a storage resource input box 713B, and 1 M/mps in a network resource input box 713C that are of an instance unit 713 corresponding to the instance 3, and enter 2u in a computing resource input box 713A, 15G in a storage resource input box 713B, and 2 M/mps in a network resource input box 713C that are of an instance unit 713 corresponding to the instance 4.

It may be understood that, although not shown in the figure, the user may further specify a type of a computing resource, a type of a storage resource, and a type of a network resource that are used for each instance. For example, the user may specify, for the instance 3, that a CPU chip is used for a computing resource, an SDD is used for a storage resource, and an SDN is used for a network resource, and specify, for the instance 4, that a CPU chip and a GPU chip are used for a computing resource, an SDD is used for a storage resource, and an SDN is used for a network resource.

The creation button 714 is configured for the user to confirm an added instance. On the contrary, the cancellation button 715 is configured for the user to cancel the added instance.

As shown in FIG. 8D, the instance deletion web page 810 includes a title bar 811, an instance selection box 812, a deletion button 813, and a cancellation button 814.

The title bar 811 is configured to display a theme of a web page, for example, an instance deletion page. The theme of the web page may be displayed in the center, displayed on the left, or the like, which is not specifically limited herein.

The instance selection box 812 may be configured to display a plurality of created instances, and a user may select an instance that needs to be deleted from the plurality of created instances. For example, the instance selection box 812 may show that an instance 1, an instance 2, an instance 3, and an instance 4 have been created based on a resource "S1". When the instance 1 and the instance 2 are selected by the user, a cloud platform may delete the instance 1 and the instance 2, and release computing resources, storage resources, and network resources occupied by the instance 1 and the instance 2.

The deletion button 813 is configured for the user to confirm deletion of an instance. On the contrary, the cancellation button 814 is configured for the user to cancel the deletion of an instance.

It may be understood that FIG. 8B and FIG. 8D show only examples of the instance adding web page 710 and the instance deletion web page 810 on the terminal device, and should not constitute a limitation on the embodiments of this application.

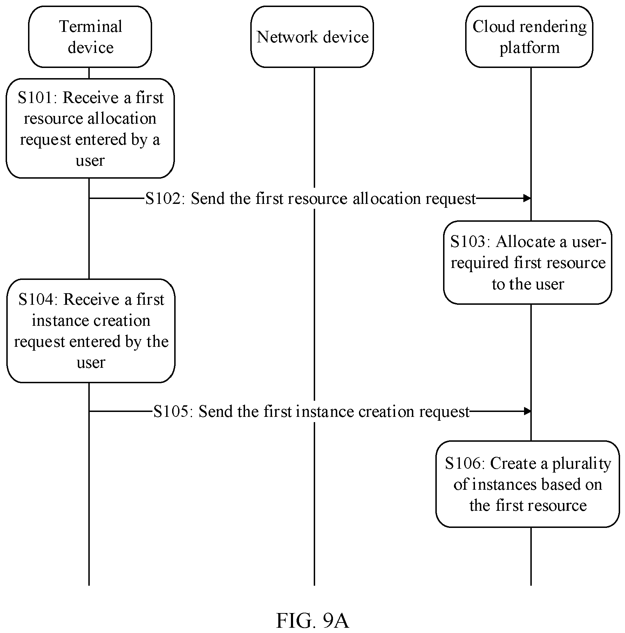

FIG. 9A is a schematic flowchart of an instance creation method according to this application. The instance creation method in this implementation includes the following steps.

S101: A terminal device receives a first resource allocation request entered by a user. The first resource allocation request is used to request a cloud platform to allocate a user-required resource to the user.

In a specific embodiment, the first resource allocation request may carry a resource name, and a quantity of computing resources, a quantity of storage resources, a quantity of network resources, and the like that the user expects to purchase. In addition, a first resource allocation request may further carry a type of a computing resource, a type of a storage resource, a type of a network resource, and the like that are specified by the user, which is not specifically limited herein.

In a specific embodiment, the user may log in, by using the terminal device, to a resource purchase web page provided by the cloud platform, and enter, on the resource purchase web page, a resource name, the quantity of computing resources, the quantity of storage resources, the quantity of network resources, and the like that the user expects to purchase. For details, please refer to FIG. 6 and related content, and details are not described herein again.

S102. The terminal device sends the first resource allocation request to the cloud platform by using a network device. Correspondingly, the cloud platform receives the first resource allocation request sent by the terminal device by using the network device.

S103. The cloud platform allocates a user-required first resource to the user according to the first resource allocation request sent by the terminal device.

In a specific embodiment, the cloud platform may allocate, to the user, the quantity of computing resources, the quantity of storage resources, and the quantity of network resources that the user expects to purchase.

In a specific embodiment, after the cloud platform allocates the user-required first resource to the user, the cloud platform grants the user a permission to view a usage status of the first resource. The user may query the usage status of the first resource, for example, a usage status of the computing resource, a usage status of the storage resource, or a usage status of the network resource.

In a specific embodiment, the user may optimize a manner for using a resource allocated to the user. After the cloud platform allocates the user-required resource to the user, the user may create a conventional data center for the user based the first resources and optimize the first resources in an optimization manner for the conventional data center for the user.

S104: The terminal device receives a first instance creation request entered by the user. The first instance creation request is used to request the cloud platform to create an instance based on the resource.

In a specific embodiment, the first instance creation request may carry a quantity of instances, a computing resource, a storage resource, a network resource that are required by an instance, and the like. Optionally, the instance creation request may further carry a type of the computing resource, a type of the storage resource, a type of the network resource, and the like used for an instance, which is not specifically limited herein.

In a specific embodiment, the user may view the usage status of the first resource, and determine, according to the usage status of the first resource, how to create an instance. Specifically, the user may send a first query instruction to the cloud platform. The cloud platform queries the usage status of the first resource according to the first query instruction, and sends the usage status of the first resource to the user. The user may determine, according to the usage status of the first resource, how to create an instance.

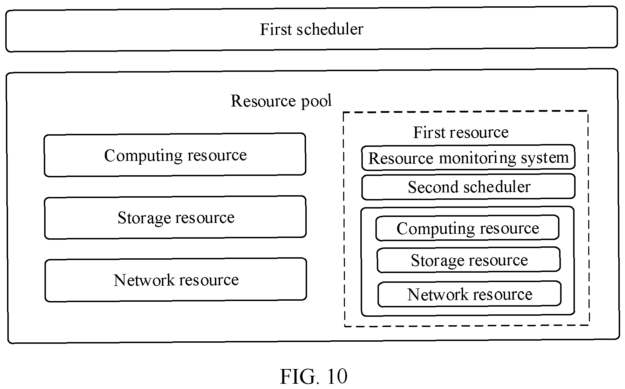

In a specific embodiment, as shown in FIG. 10, a cloud platform may set a first scheduler for a resource pool, that is, the scheduler 218 shown in FIG. 4A, or the scheduler 317 shown in FIG. 4B, and create a second scheduler and a resource monitoring system for a first resource allocated to a user. The first scheduler belongs to a provider of the cloud platform. That is, the provider of the cloud platform may schedule and manage a resource in the resource pool by using the first scheduler. The second scheduler and the resource monitoring system belong to the user. That is, the user may monitor a usage status of the first resource by using the resource monitoring system, and schedule and manage a resource in the first resource by using the second scheduler, thereby implementing load balancing, fault prediction, and the like of an instance in the first resource.

In a specific embodiment, the user may log in, by using a terminal device, to an instance creation web page provided by the cloud platform, and enter, on the instance creation web page, a quantity of instances, and a computing resource, a storage resource, a network resource, and the like that are required by an instance. For details, please refer to FIG. 7 and related content, and details are not described herein again.

S105: The terminal device sends a first instance creation request to the cloud platform by using the network device. Correspondingly, the cloud platform receives the first instance creation request sent by the terminal device by using the network device.

S106. The cloud platform creates a plurality of instances based on the first resource according to the first instance creation request sent by the terminal device.

In this embodiment, the cloud platform allocates a user-required resource to the user. The user may create an instance based on the first resource according to a requirement of the user. Because the first resource belongs to the user, the user may set the second scheduler and the resource monitoring system for the first resource. Therefore, the usage status of the first resource may be monitored by using the resource monitoring system, and the first resource may be scheduled and managed according to the usage status of the first resource by using the second scheduler, thereby improving utilization of the first resource.

After creating the plurality of instances based on the first resource, the cloud platform may further add an instance based on the first resource, to improve the utilization of the first resource, or reduce an instance based on the first resource, to reduce a load of the first resource, thereby improving performance of an instance based on the first resource.

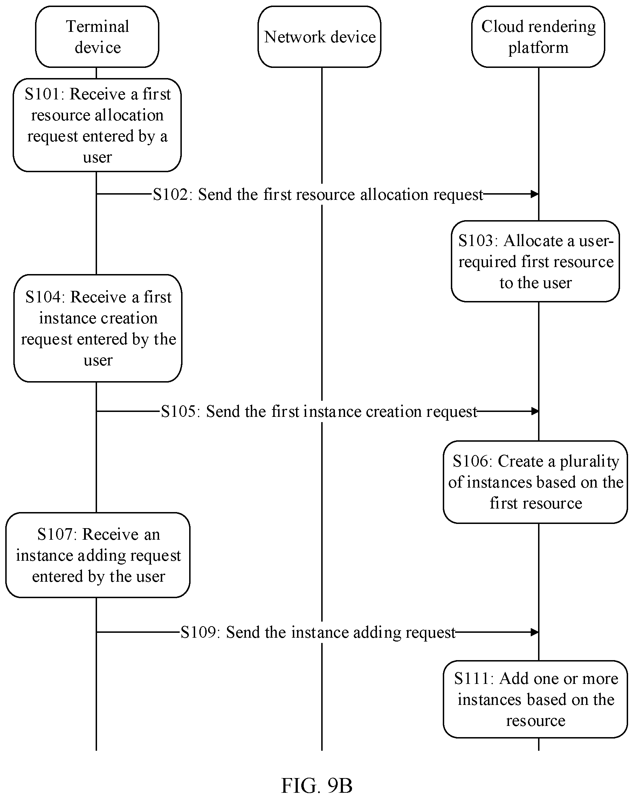

As shown in FIG. 9B, the cloud platform may add one or more instances based on the first resource. Based on the step S101 to the step S106 of the instance creation method shown in FIG. 9A, the following steps may be further increased.

S107: The terminal device receives an instance adding request entered by the user. The instance adding request is used to request the cloud platform to add an instance based on the first resource.

In a specific embodiment, the instance adding request may carry a resource name, a quantity of added instances, and a quantity of computing resources, a quantity of storage resources, a quantity of network resources, and the like of each added instance. In addition, the resource adding request may further carry a type of a computing resource, a type of a storage resource, a type of a network resource, and the like of an added instance specified by the user, which is not specifically limited herein.

In a specific embodiment, the user may log in, by using the terminal device, to the instance adding page provided by the cloud platform, and enter the quantity of added instances, and the quantity of computing resources, the quantity of storage resources, the quantity of network resources, and the like of each added instance on the instance adding page. For details, please refer to FIG. 6 and related content. Details are not described herein again.

S109: The terminal device sends the instance adding request to the cloud platform by using the network device. Correspondingly, the cloud platform receives the instance adding request sent by the terminal device by using the network device.

S111: The cloud platform adds one or more instances based on the first resource according to the instance adding request sent by the terminal device.

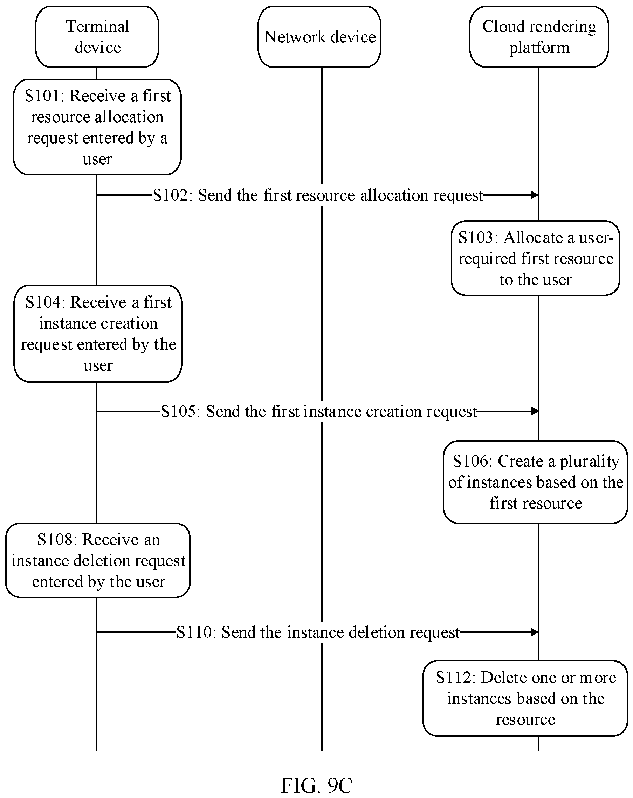

As shown in FIG. 9C, the cloud platform may reduce one or more instances based on the first resource. Based on the step S101 to the step S106 of the instance creation method shown in FIG. 9A, the following steps may be further increased.

S 108. The terminal device receives an instance deletion request entered by the user. The instance deletion request is used to request the cloud platform to delete an instance based on the first resource.

In a specific embodiment, the instance deletion request may carry a resource name, an instance deletion identifier, and the like.

In a specific embodiment, the user may log in, by using the terminal device, to an instance deletion page provided by the cloud platform, and select, on the instance deletion page, an instance that needs to be deleted. For details, please refer to FIG. 7 and related content. Details are not described herein again.

S110: The terminal device sends the instance deletion request to the cloud platform by using the network device. Correspondingly, the cloud platform receives the instance deletion request sent by the terminal device by using the network device.

S112: The cloud platform deletes one or more instances based on the first resource according to the instance deletion request sent by the terminal device.

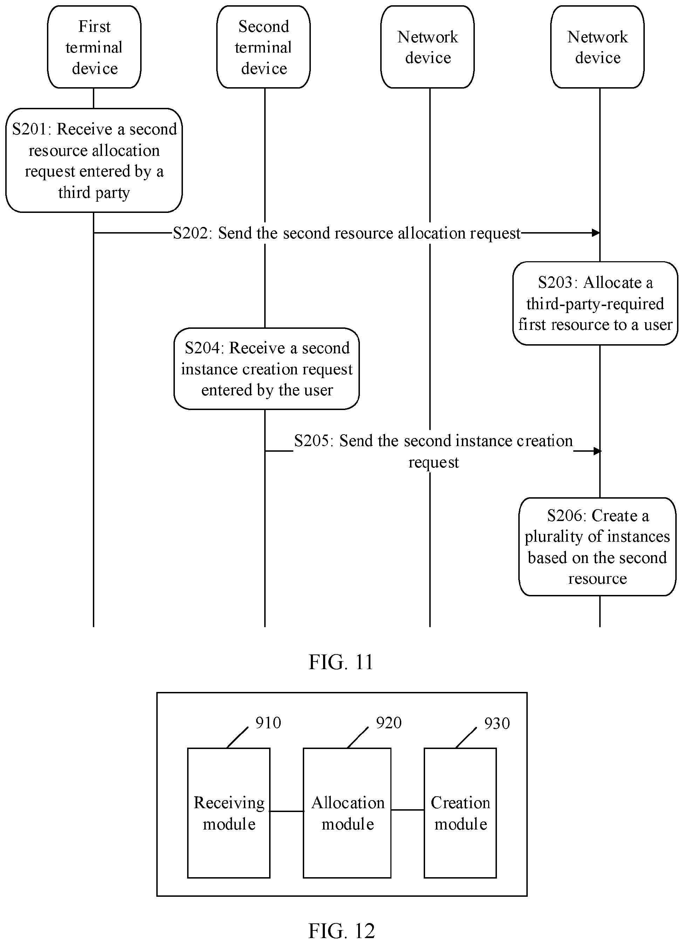

FIG. 11 is a second schematic flowchart of an instance creation method according to this application. The instance creation method in this implementation includes the following steps.

S201: A first terminal device receives a second resource allocation request entered by a third party. The second resource allocation request is used to request a cloud platform to allocate a third-party-required resource to the third party.

In a specific embodiment, the third party may be an intermediary that specifically purchases a resource from a cloud service provider and distributes the purchased resource to a consumer.

In a specific embodiment, the second resource allocation request may carry a resource name, and a quantity of computing resources, a quantity of storage resources, a quantity of network resources, and the like that a user expects to purchase. In addition, the second resource allocation request may further carry a type of a computing resource, a type of a storage resource, a type of a network resource, and the like that are specified by the user, which is not specifically limited herein.

In a specific embodiment, the third party may log in, by using the first terminal device, to a resource purchase web page provided by the cloud platform, and enter, on the resource purchase web page, the resource name, the quantity of computing resources, the quantity of storage resources, the quantity of network resources, and the like that the user expects to purchase. For details, please refer to FIG. 6 and related content. Details are not described herein again.

S202. The first terminal device sends a second resource allocation request to the cloud platform by using a network device. Correspondingly, the cloud platform receives the second resource allocation request sent by the first terminal device by using the network device.

S203: The cloud platform allocates a third-party-required second resource to the third party according to the second resource allocation request sent by the first terminal device.

In a specific embodiment, the cloud platform may allocate, to the third party, a quantity of computing resources, a quantity of storage resources, and a quantity of network resources that the third party expects to purchase.

In a specific embodiment, after the cloud platform allocates the third-party-required resource to the third party, the cloud platform grants the third party a permission to view a usage status of the resources. The third party may query the usage status of the second resources. For example, a usage status of the computing resource, a usage status of the storage resource, or a usage status of the network resource. On the contrary, if no resource allocated to the third party exists on the cloud platform, the cloud platform does not grant a permission to view the usage status of the second resources. The third party cannot query the usage status of the second resources.

In a specific embodiment, the third party may optimize a manner for using the resource allocated to the third party. After the cloud platform allocates the third-party-required resource to the third party, the third party may create a conventional data center for the third party based on the second resources and optimize the second resources in an optimization manner for the conventional data center of the third party.

S204: A second terminal device receives a second instance creation request entered by the user. The second instance creation request is used to request the cloud platform to create an instance based on the second resource.

In a specific embodiment, the second instance creation request may carry a quantity of instances, and a computing resource, a storage resource, a network resource that are required by an instance, and the like. Optionally, the instance creation request may further carry a type of the computing resource, a type of the storage resource, a type of the network resource, and the like used for an instance, which is not specifically limited herein.

In a specific embodiment, the user may log in, by using the second terminal device, to an instance creation web page provided by the cloud platform, and enter, on the instance creation web page, the quantity of instances, and the computing resource, the storage resource, the network resource, and the like that are required by the instance. For details, please refer to FIG. 7 and related content. Details are not described herein again.

S205: The second terminal device sends the second instance creation request to the cloud platform by using the network device. Correspondingly, the cloud platform receives the second instance creation request sent by the second terminal device by using the network device.

S206: The cloud platform creates a plurality of instances based on the second resource according to the second instance creation request sent by the second terminal device.

In a specific embodiment, the third party may view a usage status of the second resource, and determine, according to the usage status of the second resource, how to create an instance. Specifically, the third party may send a second query instruction to the cloud platform. The cloud platform queries the usage status of the second resource according to the second query instruction, and sends the usage status of the second resource to the third party. The third party may determine, according to the usage status of the second resource, how to allow the user to create an instance.

It may be understood that the user may also add an instance based on the second resource and delete an instance based on the second resource. A specific process is similar to that of adding an instance based on the first resource and deleting an instance based on the first resource corresponding to FIG. 9A. Please refer to step S107 to step S 112 in FIG. 9A. Details are not described herein again.

In the foregoing embodiment, the third party may purchase the second resource from a provider of the cloud platform, and create an instance based on the second resource according to a requirement of the user. The third party, as an intermediary, manages and charges the user and promotes the third party to create more services that improve utilization of the cloud platform, thereby booming a market of the cloud platform.

FIG. 12 is a schematic diagram of a structure of a management node according to this application. The management node in this implementation includes: a receiving module 910, an allocation module 920, and a creation module 930.

In a specific embodiment, each module of a cloud platform may perform the following functions.

The receiving module 910 is configured to receive a first resource allocation request from a first user. The first resource allocation request includes a quantity of resources that need to be allocated to the first user.

The allocation module 920 is configured to allocate a first resource to the first user according to the quantity of resources that need to be allocated to the first user.

The receiving module 910 is configured to receive a first instance creation request from the first user. The first instance creation request includes a quantity of instances that need to be created for the first user.

The creation module 930 is configured to create an instance based on the first resource according to the quantity of instances that need to be created for the first user.

In the foregoing solution, the cloud platform may perform the method recorded in FIG. 9A to FIG. 9B. For details, please refer to the records in FIG. 9A to FIG. 9B. Details are not described herein again.

In a specific embodiment, each module of a cloud platform may perform the following functions.

The receiving module 910 is configured to receive, by the cloud platform, a second resource allocation request from a third party. The second resource allocation request includes a quantity of resources that need to be allocated to the third party.

The allocation module 920 is configured to allocate a second resource to the third party according to the quantity of resources that need to be allocated to the third party.

The receiving module 910 is configured to receive a second instance creation request from a second user. The second instance creation request includes a quantity of instances that need to be created for the second user.

The creation module 930 is configured to create an instance based on the second resource according to the quantity of instances that need to be created for the second user.

In the foregoing embodiment, the cloud platform may perform the method recorded in FIG. 11. For details, please refer to the records in FIG. 11. Details are not described herein again.

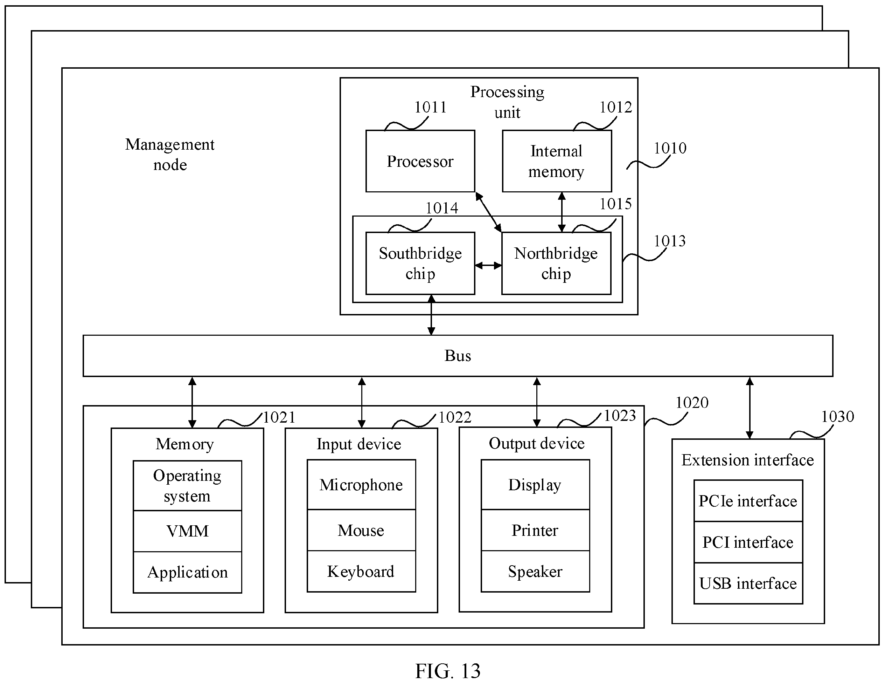

FIG. 13 is a schematic diagram of a structure of a management node according to this application. The management node in this implementation may be a management node in the cloud platform in FIG. 4A and FIG. 4B. The management node in this implementation may include one or more processing units 1010, one or more I/O devices 1020, an extension interface 1030, and the like.

The processing unit 1010 may include a processor 1011, for example, a central processing unit (central processing unit, CPU). The CPU may use a complex instruction set computer (complex instruction set computer, CISC) architecture (for example, an x86 architecture), a reduced instruction set computer (reduced instruction set computer, RISC) architecture (for example, an MIPS (microprocessor without interlocked piped stages) architecture), or the like.

The processing unit 1010 may further include an internal memory 1012, a chipset 1013, a register (not shown in the figure), and the like.

The internal memory 1012 is configured to store instructions or data that has just been just used or recycled by the processor 1011, for example, a cache. If the processor 1011 needs to use the instructions or the data again, the instructions or the data may be directly invoked from the internal memory 1012. Therefore, a time for which the processor 1011 waits is reduced, thereby improving system efficiency. When content of an internal memory data page in the internal memory 1012 is different from content of a data page in a memory 1021, the internal memory data page may be referred to as a dirty page. When the content of the internal memory data page in the internal memory 1012 is the same as content of the data page in the memory 1021, the internal memory data page may be referred to as a clean page.

The chipset may include a northbridge chip 1015. The northbridge chip 1015 is a chip closest to the CPU, and is configured to be responsible for data transmission between the processor 1011 and the internal memory 1012. Because the northbridge chip 1015 processes a large amount of data and generates a large amount of heat, the northbridge chip 1015 may be covered with a heat sink or work with a fan to enhance heat dissipation. Optionally, the chipset may further include a southbridge chip 1014. One end of the southbridge chip 1014 is connected to the processor 1011 through the northbridge chip 1015, and the other end is connected to interfaces of various external devices. In some specific embodiments, the northbridge chip 1015 may be integrated into the processor 1011, some functions of the southbridge chip 1014 are integrated into the northbridge chip 1015, the southbridge chip 1014 may be integrated into the processor 1011, the southbridge chip 1014 is integrated into the northbridge chip 1015, or the like.

The registers are high-speed storage components with a limited storage capacity. The registers may be configured to temporarily store OS status data such as instructions, data, and an address, for example, an instruction register (IR), a program counter (PC), and an accumulator (ACC).

Optionally, the processing unit 1010 further includes a digital signal processor (digital signal processor, DSP), a graphics processing unit (graphics processing unit, GPU), a neural-network processing unit (neural-network processing unit, NPU), and the like. When there are a plurality of processors in the processing unit, the processor in the processing unit may be of homogeneous structure or of a heterogeneous structure. A common heterogeneous structure may be a CPU and DSP, a CPU and NPU, a CPU and GPU, a CPU, DSP, and GPU, or the like.

The I/O device 1020 may include the memory 1021. The memory 1021 may be configured to store an executable program code. The executable program code includes instructions. The processor 1011 executes various function applications of the management node and data processing by running instructions in the memory 1021. The memory 1021 may store code from an operating system, a virtual machine monitor (virtual machine monitor, VMM), or the like. The operating system may be a system installed by a user, for example, a Linux system, a Windows system, or a DOS system. The VMM is optional. That is, the VMM does not work normally, and works only during live migration. The VMM may be lightweight, and only needs to complete basic functions such as CPU virtualization and internal memory virtualization, or may be heavyweight, for example, a VMM that can complete an advanced function, such as XEN or KVM. In addition, the I/O device 1020 may further include an input device 1022 and an output device 1023. The input device 1022 may include a keyboard, a mouse, a scanner, a camera, a microphone, and the like. The output device 1023 may include a speaker, a loudspeaker, a printer, a display, a display card, and the like.

The extension interface 1030 may include a plurality of interfaces. For example, a peripheral component interconnect (peripheral component interconnect, PCI) interface, a peripheral component interconnect express (peripheral component interconnect express, PCIe) interface, a universal serial bus (universal serial bus, USB) interface, a universal asynchronous receiver/transmitter (universal asynchronous receiver/transmitter, UART) interface, a joint test working group (joint test action group, JTAG) interface, and the like.

The management node may further include a basic input/output system (basic input output system, BIOS) and the like.

The BIOS, also referred to as a read-only memory (Read-Only Memory, ROM) BIOS, a system BIOS, or a personal computer (personal computer, PC) BIOS, is a component for initializing and testing hardware, loads a bootstrap program from the memory 1021, and loads the operating system and VMM by using the bootstrap program. If the operating system is the DOS system, the BIOS further provides a hardware abstraction layer of a keyboard, display, and another I/O device for the DOS operating system.

It may be understood that the foregoing management node may further include more components, for example, a clock chip and a power management chip, which is not specifically limited herein.

In the foregoing embodiment, the cloud platform may perform the methods recorded in FIG. 9A to FIG. 9C and FIG. 11. For details, please refer to records in FIG. 9A to FIG. 9C and FIG. 11. Details are not described herein again.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on the computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a storage disk, or a magnetic tape), an optical medium (for example, a DVD), or a semiconductor medium (for example, a solid-state drive (Solid-State Drive, SSD)).

## Claims

1. An instance creation method, comprising:
receiving, by a cloud platform, a first resource allocation request from a first user, wherein the first resource allocation request comprises a quantity of resources that need to be allocated to the first user;
allocating, by the cloud platform, a first resource to the first user according to the quantity of resources that need to be allocated to the first user;
receiving, by the cloud platform, a first instance creation request from the first user, wherein the first instance creation request comprises a quantity of instances that need to be created for the first user; and
creating, by the cloud platform, an instance based on the first resource according to the quantity of instances that need to be created for the first user.

2. The method according to claim 1, wherein
the cloud platform receives a first instance adding request from the first user, wherein the first instance adding request comprises a quantity of instances that need to be added for the first user; and
the cloud platform adds an instance based on the first resource according to the quantity of instances that need to be added for the first user.

3. The method according to claim 1 or 2, wherein
the cloud platform receives a first instance deletion request from the first user, wherein the first instance deletion request comprises a quantity of instances that need to be deleted for the first user; and
the cloud platform deletes an instance based on the first resource according to the quantity of instances that need to be deleted for the first user.

4. The method according to any one of claims 1 to 3, wherein the quantity of instances that need to be created for the first user is greater than or equal to 2.

5. The method according to any one of claims 1 to 4, wherein
the cloud platform receives a first query instruction from the first user; and
the cloud platform queries a usage status of the first resource according to the first query instruction, and sends the usage status of the first resource to the first user.

6. An instance creation method, comprising:
receiving, by a cloud platform, a second resource allocation request from a third party, wherein the second resource allocation request comprises a quantity of resources that need to be allocated to the third party;
allocating, by the cloud platform, a second resource to the third party according to the quantity of resources that need to be allocated to the third party;
receiving, by the cloud platform, a second instance creation request from a second user, wherein the second instance creation request comprises a quantity of instances that need to be created for the second user; and
creating, by the cloud platform, an instance based on the second resource according to the quantity of instances that need to be created for the second user.

7. The method according to claim 6, wherein
the cloud platform receives a second instance adding request from the second user, wherein the second instance adding request comprises a quantity of instances that need to be added for the second user; and
the cloud platform adds an instance based on the second resource according to the quantity of instances that need to be added for the second user.

8. The method according to claim 6 or 7, wherein
the cloud platform receives a second instance deletion request from the second user, wherein the second instance deletion request comprises a quantity of instances that need to be deleted for the second user; and
the cloud platform deletes an instance based on the second resource according to the quantity of instances that need to be deleted for the second user.

9. The method according to any one of claims 6 to 8, wherein the quantity of instances that need to be created for the second user is greater than or equal to 2.

10. The method according to any one of claims 6 to 9, wherein
the cloud platform receives a second query instruction from the third party; and
the cloud platform queries a usage status of the second resource according to the second query instruction, and sends the usage status of the second resource to the third party.

11. A cloud platform, comprising a receiving module, an allocation module, and a creation module, wherein
the receiving module is configured to receive a first resource allocation request from a first user, wherein the first resource allocation request comprises a quantity of resources that need to be allocated to the first user;
the allocation module is configured to allocate a first resource to the first user according to the quantity of resources that need to be allocated to the first user;
the receiving module is configured to receive a first instance creation request from the first user, wherein the first instance creation request comprises a quantity of instances that need to be created for the first user; and
the creation module is configured to create an instance based on the first resource according to the quantity of instances that need to be created for the first user.

12. The cloud platform according to claim 11, wherein the cloud platform further comprises an adding module, wherein
the receiving module is configured to receive a first instance adding request from the first user, wherein the first instance adding request comprises a quantity of instances that need to be added for the first user; and
the adding module is configured to add an instance based on the first resource according to the quantity of instances that need to be added for the first user.

13. The cloud platform according to claim 11 or 12, wherein the cloud platform further comprises a deletion module, wherein
the receiving module is configured to receive a first instance deletion request from the first user, wherein the first instance deletion request comprises a quantity of instances that need to be deleted for the first user; and
the deletion module is configured to delete an instance based on the first resource according to the quantity of instances that need to be deleted for the first user.

14. The cloud platform according to any one of claims 11 to 13, wherein the quantity of instances that need to be created for the first user is greater than or equal to 2.

15. The cloud platform according to any one of claims 11 to 14, further comprising a query module, wherein
the receiving module is configured to receive a first query instruction from the first user; and
the query module is configured to query a usage status of the first resource according to the first query instruction, and send the usage status of the first resource to the first user.

16. A cloud platform, comprising a receiving module, an allocation module, and a creation module, wherein
the receiving module is configured to receive, by the cloud platform, a second resource allocation request from a third party, wherein the second resource allocation request comprises a quantity of resources that need to be allocated to the third party;
the allocation module is configured to allocate a second resource to the third party according to the quantity of resources that need to be allocated to the third party;
the receiving module is configured to receive a second instance creation request from a second user, wherein the second instance creation request comprises a quantity of instances that need to be created for the second user; and
the creation module is configured to create an instance based on the second resource according to the quantity of instances that need to be created for the second user.

17. The cloud platform according to claim 16, wherein the cloud platform further comprises an adding module, wherein
the receiving module is configured to receive a second instance adding request from the second user, wherein the second instance adding request comprises a quantity of instances that need to be added for the second user; and
the adding module is configured to add an instance based on the second resource according to the quantity of instances that need to be added for the second user.

18. The cloud platform according to claim 16 or 17, wherein the cloud platform further comprises a deletion module, wherein
the receiving module is configured to receive a second instance deletion request from the second user, wherein the second instance deletion request comprises a quantity of instances that need to be deleted for the second user; and
the deletion module is configured to delete an instance based on the second resource according to the quantity of instances that need to be deleted for the second user.

19. The cloud platform according to any one of claims 16 to 18, wherein the quantity of instances that need to be created for the second user is greater than or equal to 2.

20. The cloud platform according to any one of claims 16 to 19, further comprising a query module, wherein
the receiving module is configured to receive a second query instruction from the third party; and
the query module is configured to query a usage status of the second resource according to the second query instruction, and send the usage status of the second resource to the third party.

21. A management node, comprising a processor and a memory, wherein the processor executes code in the memory to perform the method according to any one of claims 1 to 10.

22. A computer-readable storage medium, comprising instructions, wherein when the instructions are run on a computer, the computer is enabled to perform the method according to any one of claims 1 to 10.
